# EUROPEAN PATENT SPECIFICATION

(11) **EP 4 139 194 B1**
(45) Date of publication and mention of the grant of the patent: **14.10.2026**
(21) Application number: 21729045.1
(22) Date of filing: 22.04.2021
(51) Int. Cl.: B62J 11/13, B62J 11/19, B62J 45/00, B62J 45/40, B62K 11/10, B62K 23/04, B62J 45/413, B62K 19/32

(54) **TWO-WHEELED OF TRHEE-WHEELED VEHICLE COMPRISING AN ACCELERATOR POSITION SENSOR**
ZWEIRAD- ODER DREIRADFAHRZEUG MIT EINEM GASDREHGRIFF-POSITIONSSENSOR
VÉHICULE À DEUX ROUES OU À TROIS ROUES COMPRENANT UN CAPTEUR DE POSITION DE L'ACCÉLÉRATEUR

(30) Priority: 23.04.2020 IN 202041017487
(43) Date of publication of application: 01.03.2023
(73) Proprietor: TVS Motor Company Limited, 600006 Chennai (IN)
(72) Inventor: KUMAR, Surendiran, Chennai, 600 006 (IN); ANURAG, Khandual, Chennai, 600 006 (IN); SORNAPPAN BANU, Sharmanath, Chennai, 600 006 (IN)
(74) Representative: Patentanwaltskanzlei Matschnig & Forsthuber OG
(86) International application number: PCT/IN2021/050397
(87) International publication number: WO 2021/214791

(56) References cited:
- EP-A1- 2 399 810
- JP-A- 2013 238 159
- JP-A- 2017 081 384
- JP-A- 2017 081 513
- JP-A- H06 141 407
- US-B2- 8 496 084

## Description

### TECHNICAL FIELD

The present subject matter relates generally to a two-wheeled or three wheeled vehicle. More particularly but not exclusively the present subject matter relates to the location of an Acceleration position sensor (APS) unit in a vehicle.

### BACKGROUND

Generally, in internal combustion engine powered vehicles, required fuel is supplied to the engine through the throttle control unit. The throttle control body includes a valve that opens and allows required fuel to flow, based on the acceleration or throttle input applied by the rider of vehicle. In Electric vehicles, the traction power is supplied by a battery to a motor that drives a rear wheel. The battery supplies power based on input received from an electronic control unit (ECU). Said control unit receives signal from an acceleration position sensor that senses and transmits the position of the accelerator to the control unit. Based on this information, the torque or power requested by the driver can be supplied immediately. In drive-by-wire two or three wheeled vehicles, which may be configured with either a carburetor or a throttle body EFI system, the acceleration position sensor also performs similar function of sensing the demand from the user & providing the signal input to the ECU to perform necessary downstream function.

Location of the acceleration position sensor, which is an important & relatively large in size component, becomes a major challenge while packaging the two-wheeled vehicle due to space constraints. Generally, in two-wheeled or three wheeled vehicles, said acceleration position sensor (APS) unit is mounted either near the control unit or handlebar region.

In one scenario, the acceleration position sensor (APS) unit mounted near the handlebar region is positioned in proximity to the grip region of the handle bar. At this location, cover panels of the vehicle, also covers the handle bar, thereby covering the acceleration position sensor (APS) resulting in a bulky packaging for the handlebar region. Bulky handle bar regions are not preferable for the two wheelers as this cause customer discomfort. Additionally, if the vehicle falls, due to mishandling or some accident, the handlebar region gets the maximum impact, which leads to damages of the acceleration sensor unit causing vehicle immobility & potentially high cost of repair to the user. Additionally, higher mass disposition on the handle bar unit can disturb the balance of the handle bar unit thereby leading to handling problems like one side pulling of the vehicle or constant stress on the rider to counterbalance the imbalance while riding.

In another scenario, the acceleration position sensor (APS) unit is mounted near the control unit, which is typically placed in longitudinally middle region of the vehicle. This location of the acceleration position sensor results in long cable requirement, extending from the handlebar to the acceleration position sensor placed near the control unit. With higher distance between the acceleration lever on the handle bar and the acceleration position sensor, the output from the acceleration position sensor will not be accurate and can have lag, which may affect the traction performance of the vehicle. Additionally, with a longer length of the cable usage wear and tear of the cable increase which again adds to the maintenance cost for the customer. There also exists a challenge of enabling ease of assembly as well as ease of access for service of the APS unit.

Also, with high style requirements from the customers, packaging a two-wheeler or three-wheeler is challenging due to high functional component requirement and limited space available to mount said functional components. Therefore, a secure and suitable location for mounting the acceleration position sensor becomes a challenge while packaging two-wheeled or three wheeled vehicles especially with a handle bar configuration where the rider is disposed axis-symmetrically along the longitudinal central plane of the vehicle.

The document EP 2 399 810 A1 discloses the features of the preamble of claim 1.

### BRIEF DESCRIPTION OF THE DRAWINGS

Figure 1 exemplarily illustrates a two-wheeled vehicle.
Figure 2 (a) & (b) exemplarily illustrates the magnified view of an APS unit placed between the first and second panel members.
Figure 3 (a) and (b) exemplarily illustrates the APS unit mounted on the head pipe of the frame.
Figure 4 exemplarily illustrates an exploded view of the acceleration position sensor (APS) mounted on the head pipe of the vehicle frame.
Figure 5 (a) exemplarily illustrates an enlarged local view of the APS unit.
Figure 5 (b) exemplarily illustrates an interfacing region between the front brakes and the APS unit.
Figure 6 exemplarily illustrates the mounting surfaces of the APS mounting brackets.
Figure 7 and Figure 8 exemplarily illustrates the positioning of the APS unit with respect to a cable guide and the head pipe of the vehicle.
Figure 9 and 10 exemplarily illustrates a routing of a throttle cable from the handle bar assembly to the APS unit.
Figure 11 exemplarily illustrates the APS unit in a front view of the vehicle.

### DETAILED DESCRIPTION

The main objective of the present subject matter is to provide a secure stable and effective mounting location for an acceleration position sensor (APS) unit to achieve a compact layout of a two-wheeled or three-wheeled vehicle. For the present subject matter, the two wheeled vehicle is described with an embodiment in an electric two-wheeled scooter type vehicle. However, the invention is applicable to any two wheeled or three wheeled vehicles in general including motorcycles, scooters, rickshaws etc. Said electric two-wheeled vehicle includes a frame having a front portion and a rear portion. The front portion includes a head pipe and a down tube. The acceleration position sensor (hereinafter APS) is mounted on the head pipe attached to the frame of the vehicle. The acceleration position sensor is mounted by the means of a mounting bracket. The mounting bracket is disposed on the head pipe of the frame. The mounting of APS can be done in different configuration.

Another object of the present subject matter is to provide a location of APS unit which is easily accessible from either side of the two-wheeled vehicle. Placing the APS in a forward offset disposition to the head pipe results in easy access to the APS unit during assembly and thus helps in ease of assembly.

Another object of the present subject matter is to provide ease of serviceability to the customer. The APS unit is placed such that more than half region of the APS unit is covered by a second panel and remaining portion of the APS unit is covered by a first panel. The second panel covers the head pipe of the two-wheeled vehicle from the rear side of the two-wheeled vehicle. The first panel covers the head pipe from the front side of the two-wheeled vehicle. The first panel also accommodates a headlamp unit, a number plate, a pair of turn light signals, battery (if placed in front portion of vehicle), and other related components. The second panel covering the rear side of the head pipe is easy to remove for servicing purposes as compared to the first panel. In the present embodiment, user of the two-wheeled vehicle need not to remove first panel and remove multiple components to access the APS unit, however the APS unit is accessible easily from second panel making serviceability easy. In a motorcycle type two wheeled vehicle, it can be the headlamp assembly or its constituent parts which can be easily dismantled to access the APS unit.

Another object of the present subject matter is to dispose the APS unit on the head pipe of the frame, such that the APS unit and the headlamp unit overlaps each other to ensure a secured location for the APS unit. In case of vehicle imbalance or mishandling leading to a fall or frontal crash of the vehicle, the headlamp unit will take the impact load and transfer it to the vehicle frame thereby keeping the APS unit stable and secure. Thus, the durability of APS unit is maintained.

According to another embodiment of the present subject matter, the mounting bracket used for mounting APS unit has four surfaces, a side surface, a top surface, a first rear surface, and a second rear surface. The APS unit rests on the side surface. The second rear surface & top surface forms an obtuse angle with the side surface. The first rear surface is formed by joining the second rear surface and top surfaces tangentially. With this configuration, a brake cable, which is typically routed through the front region of the head pipe, when in maximum extended condition, the brake cable or hose rests on the first rear surface of the APS mounting bracket so that the brake cable durability is not affected.

According to yet another embodiment of the present subject matter, the mounting bracket used for mounting the APS unit is disposed in proximity to a cable guide at a predetermined distance D. This distance D, between the APS unit and the cable guide lies, as per an embodiment is in the range of 15mm to 55 mm depending upon the stiffness of the brake cable. The cable guide provides restriction for the brake cable and the throttle cable movement so that the cables do not interfere with the APS unit in rotated condition of the handlebar.

According to yet additional embodiment of the present subject matter, the acceleration position sensor (APS) unit is connected to a throttle cable which is routed such that the throttle cable forms an acute angle with a vertical axis of the head pipe when viewed from side of the vehicle. In an alternate embodiment, the throttle cable can be routed parallel to the vertical axis of the head pipe.

According to yet another embodiment of the present subject matter, the throttle cable emerging out of the handlebar is routed from the rear part of the head pipe and moves to the front part terminating at the APS unit, when viewed from the front side of the vehicle.

According to yet another embodiment of the present subject matter, when the handlebar of said two-wheeled vehicle is rotated towards one side e.g. right direction, the brake cable routed in opposite region, i.e. left hand (LH) region of the head pipe, is in maximum extended condition. In this condition, the brake cables passing along with the head pipe in downward direction rests & is guided on the surface of the APS mounting bracket. This configuration results into adequate operable gap for the brake cable with the APS unit. The brake cables interface with the APS mounting brackets. Hence, no undesirable interference occurs between the brake cables and the APS unit.

According to yet another embodiment of the present subject matter, the two-wheeled vehicle run by battery as a power source unit, the acceleration controlled by the APS unit is packaged near a column tube of the handlebar assembly.

According to yet another embodiment of the present subject matter, the acceleration position sensor for the two-wheeled or three-wheeled vehicle is placed such that an axis of the acceleration position sensor disposed in a lateral direction is parallel to the ground. The embodiments of the present invention will now be described in detail with reference to an embodiment in a scooter type two wheeled electric vehicle along with the accompanying drawings. The present invention is defined by the appended claims.

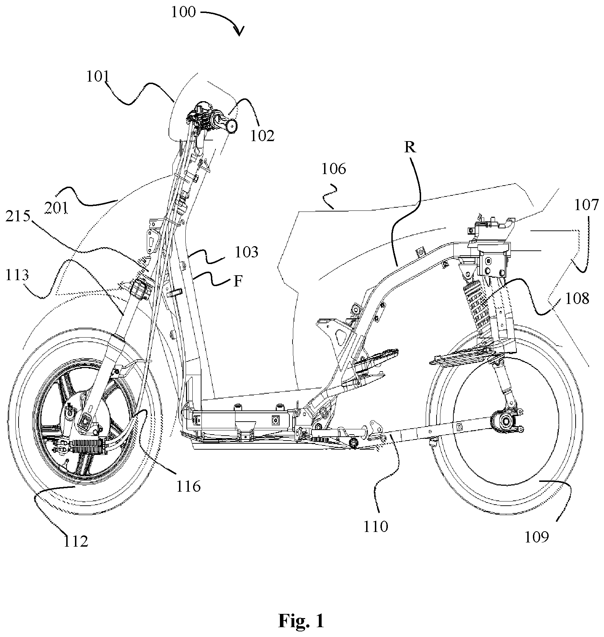

**Fig. 1** exemplarily illustrates a schematic side view of a two-wheeled vehicle **100** with body panels omitted for clarity. A frame structure of the two-wheeled vehicle **100** depicts a frame assembly having a front portion **(F)** and a rear portion **(R).** The front portion includes a head pipe **215** in the front part of the two-wheeled vehicle **100.** A front suspension **113** is connected to the head pipe **215** at one end and to a front wheel **112** at the other end. A handlebar assembly **102** is placed at the upper end of the head pipe **215** of the two-wheeled vehicle **100.** A cover handle assembly **101** (shown schematically) is provided to cover the handle bar **102** of the two-wheeled vehicle. A front brake cable or hose assembly **116** is connected to the handle bar assembly **102** and runs all the way downward along the front suspension **113** where it terminates and connects to the front wheel **112.** The front portion **(F)** of the frame assembly is covered by a first panel **201** on its front side and is covered by a second panel **103** on its rear side. The frame assembly extends downward and runs backward of the two-wheeled vehicle **100.** A seat assembly **106** is mounted at the rear side of the frame assembly. A rear wheel **109** is connected to one or more rear shock absorbers **108.** The other end of the rear shock absorber **108** is connected to the rear portion **(R)** of the frame assembly. The rear portion **(R)** of the vehicle **100** is covered by a rear panel **107.** A swingarm **110** is connected to the rear wheel **109** at one end. The other end of the swingarm **110** is connected to the frame assembly in forward longitudinal direction as that of the two-wheeled vehicle **100.**

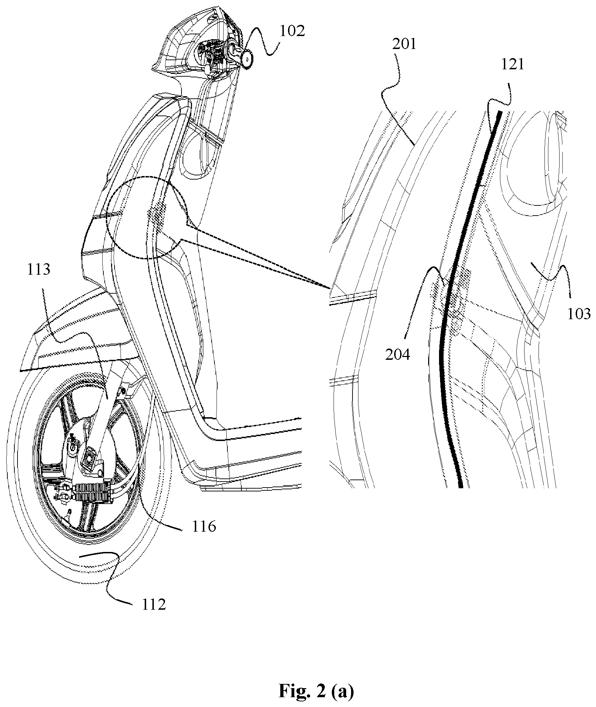

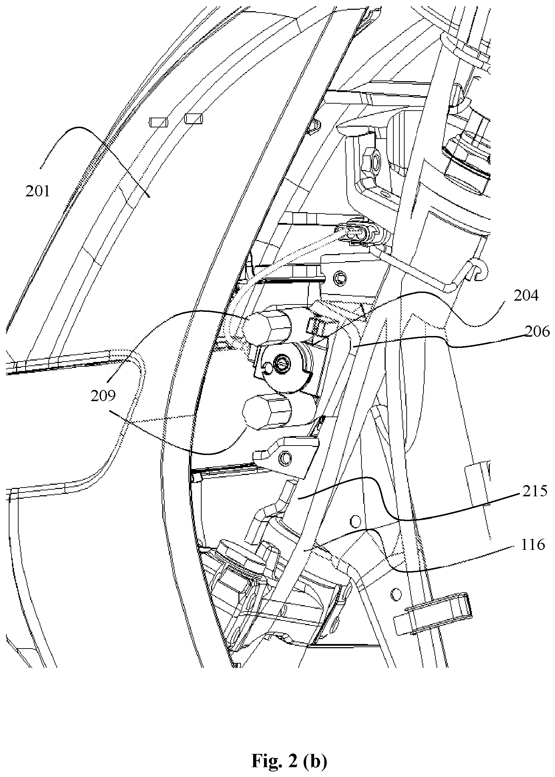

**Fig. 2 (a)** and **(b)** exemplarily illustrates a magnified local view of an APS unit **204** placed between a first and a second panel respectively **(201** and **103).** The front part **(F)** of the frame assembly of the two-wheeled vehicle **100** below the handle bar assembly **102** is covered by the first panel **201.** The rear side of the front part **(F)** of said frame assembly is covered by the second panel **103.** As per an additional embodiment, the APS unit **204** is disposed such that at least a portion of the APS unit overlaps with a joining region **121** of the first and second panel respectively **(201, 103)** when seen in side view of the vehicle. The APS unit **204** is disposed on the head pipe **215** with at least a portion of the APS unit overlapping with the joining region **121.** The APS unit **204** is positioned on the head pipe **215** such that more than half region of the APS unit **204** is overlappingly covered by the second panel **103** and remaining portion is covered by the first panel **201.** This configuration results in easy access to an APS mounting fasteners **209** at the time of serviceability of the APS unit **204.**

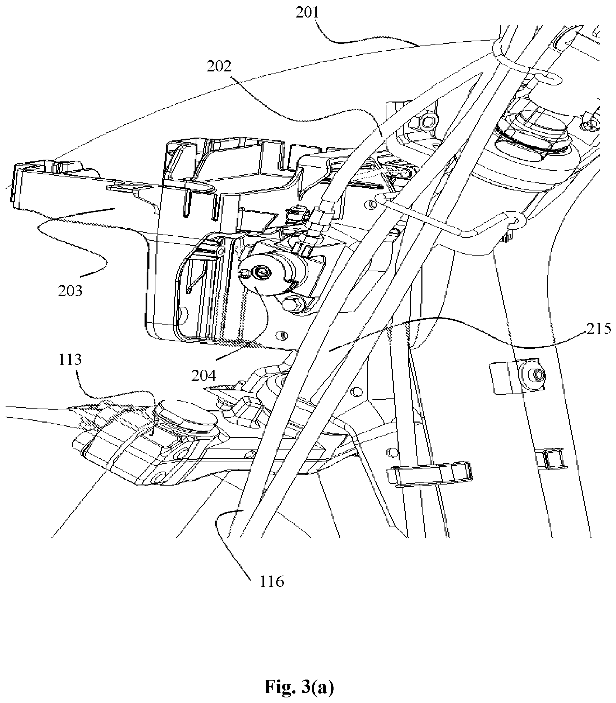

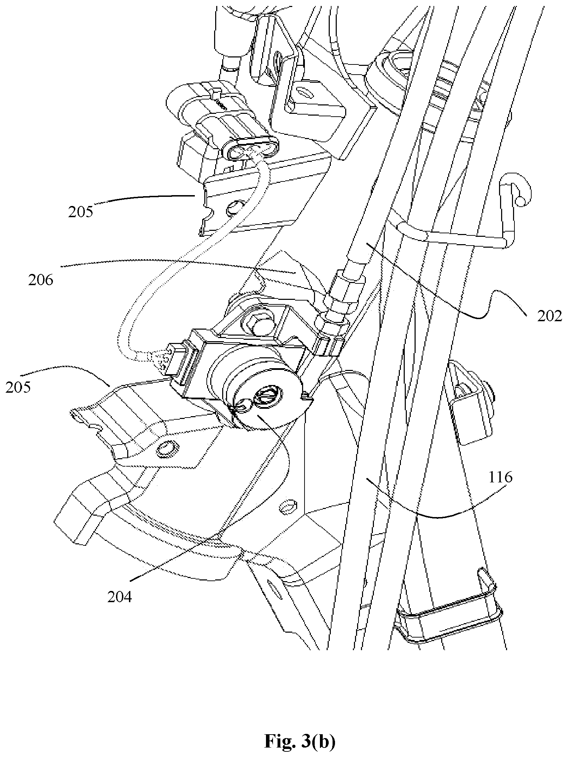

The Acceleration Position Sensor (APS) unit **204** is mounted on the head pipe **215** of the frame **104** as exemplarily illustrated in **Fig. 3 (a)** and **Fig. 3** (b). The APS unit **204** is positioned below the handlebar **102.** The APS unit **204** is mounted using an APS mounting bracket **206** which is attached to the head pipe **215** of the frame **104.** The APS unit **204** is disposed in a forward offset to the head pipe **215.** In another embodiment, the APS unit **204** is placed in a lateral left hand (LH) or right hand (RH) region of the head pipe **215** so as to enable a throttle cable **202** from the handlebar **102** to have reduced length. This reduction in length of the throttle cable **202** results in better efficiency & effective working of the APS unit **204.** In addition, the positioning of APS unit **204** at one of the lateral region of the vehicle, results in ease of accessibility at the time of assembly as well as service or repair. In an alternate embodiment, as per packaging and layout requirements, the APS unit **204** may be mounted on the RH side of the head tube, or in front of the head tube.

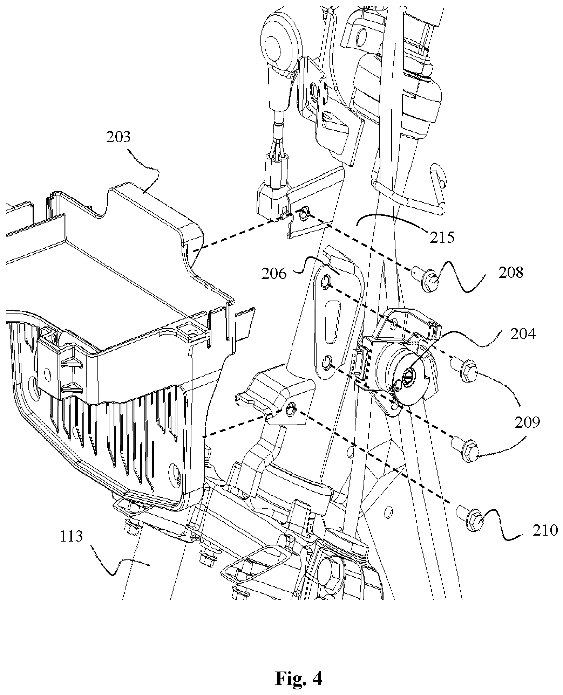

**Fig. 4** exemplarily illustrates an exploded view of the mounting of the APS unit **204** on the head pipe **215.** The APS unit **204** is mounted on a mounting bracket **206** attached to the head pipe **215.** In an additional embodiment, the APS unit **204** is mounted on the **APS** mounting bracket **206** using a number of APS mounting fasteners **209.** The APS unit **204** is disposed within a region formed between two or more headlamp mounting bracket **205** when viewed from the side of the two-wheeled vehicle **100.** The headlamp unit **203** is mounted to the headlamp mounting brackets **205** using a plurality of mounting fasteners **(208, 210).** The APS unit is disposed behind the headlamp unit **203** in order to provide a secure position for the APS unit **204.** In case of any accident or any frontal impact to the vehicle **100,** the headlamp unit **203** and the headlamp mounting brackets **205** take the impact force to prevent any damage to the APS unit **204.** The headlamp brackets **205** transfers impact force to the frame **104** keeping the APS unit **204** stable and secure.

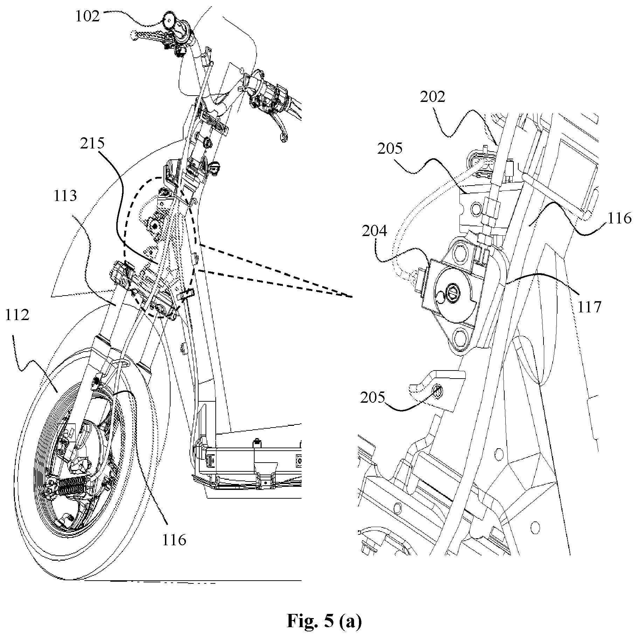

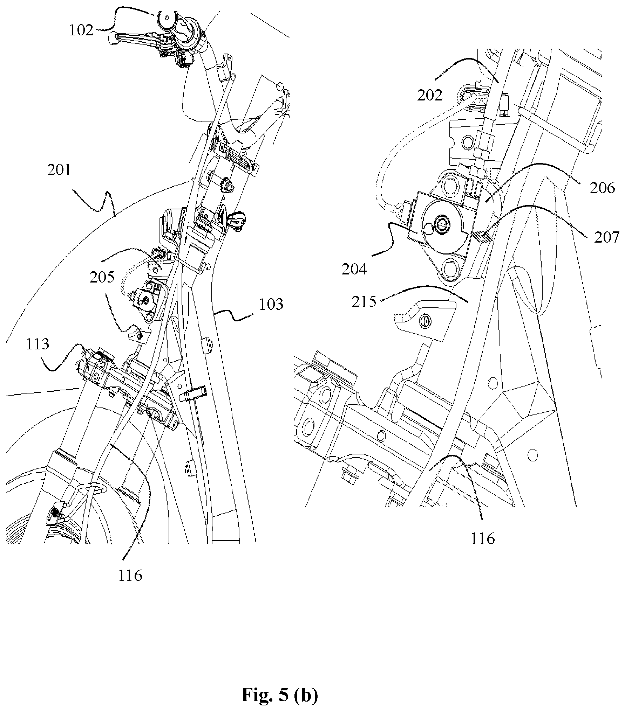

**Fig.5(a)** exemplarily illustrates an enlarged view of the APS unit **204** mounted to the head pipe **215** in a handle bar steered condition. When the handlebar **102** is rotated towards right, the front suspension **113** and the front brake cable or hose **116** are also rotated in the right direction. In the right rotated condition, the front brake cable or hose **116** and the APS mounting bracket **206** interface with each other creating an interfacing region **117,** as exemplarily illustrated in **Fig 5 (a)****.** In the right rotated condition of the handlebar **102,** the brake cable or hose **116** routed in the LH region of the head pipe **215** is in a maximum extended condition as exemplarily illustrated in **Fig.5 (b)****.** Even in the extended condition, due the mounting location of the APS unit, an adequate working gap **207** is created between the brake cable or hose **116** and the acceleration position sensor (APS) unit **204.** Such gap **207** will ensure that the brake cables or hoses **116** does not interfere with the APS unit **204** and thus protects the brake cable or hose from getting damaged.

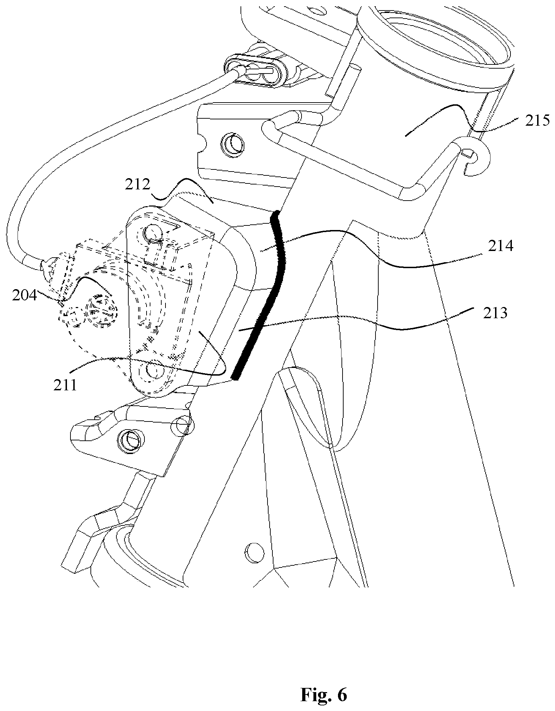

Referring to **Fig. 6****,** the mounting bracket used for mounting the APS unit **204** have a side surface **211,** a top surface **212,** a first rear surface **214,** and a second side surface **213.** The APS unit **204** rests on the side surface **211.** The second rear surface **213** & the top surface **212** form an obtuse angle with the side surface **211.The** first rear surface **214** is formed by joining the second rear surface **213** & the top surface **212** tangentially. So, the interfacing surface or region **117** (not shown in this figure) thus formed helps the brake cables **116** (not shown in this figure) to rest on it during extreme extended steered conditions. With this configuration brake cable or hose **116** in maximum extended condition rests on the first rear surface **214** so that the brake cable durability does not get affected. This helps in maintaining the brake cable life under different operating conditions.

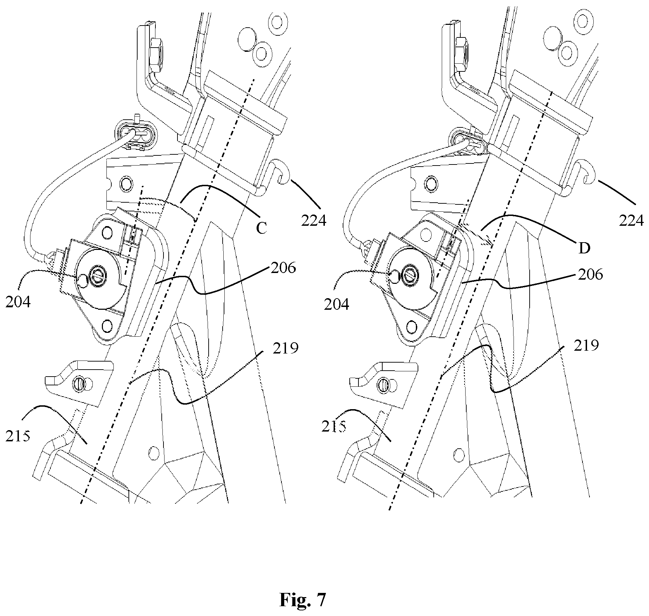

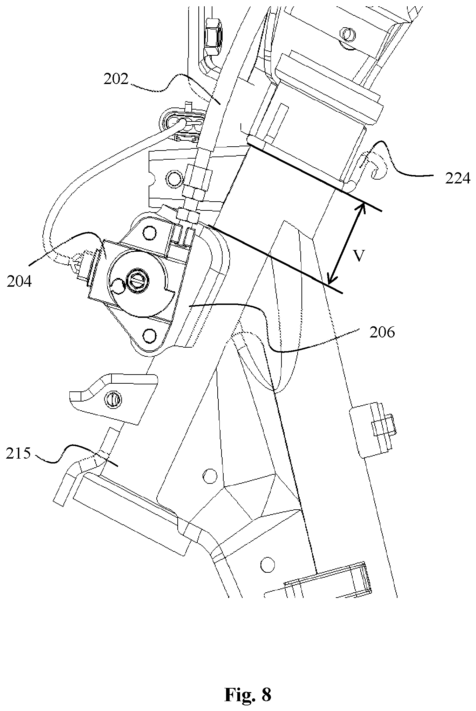

**Fig. 7** and **Fig. 8** exemplarily illustrates positioning of the APS unit **204** with respect to the head pipe **215. In** one of the embodiments, the throttle cable joining region axis on the APS unit **204** and the joining portion of the throttle cable **202** are disposed parallel to a head pipe axis **219** of the head pipe **215** with a predetermined offset **D** between them. In another embodiment, the throttle cable joining region axis on the APS unit **204** and the joining portion of the throttle cable **202** is disposed at an acute angle **C** with respect to the head pipe axis **219** of the head pipe **215** towards upward direction when viewed from side of the vehicle. This configuration provides ease of routing of the throttle cable **202** & also reduces assembly time.

As per an additional embodiment, A guide **224** is provided around the head pipe **215** for arresting the motion of the brake cable or hose **116** and the throttle cable **202** during handlebar rotation condition as shown in **Fig 8****.** This guide **224** helps in keeping the brake cables or hose **116** and the throttle cable **202** in one stable position during movement of the handlebar **102** so that it does not interfere with the APS unit **204** or with any other vehicular components. The APS unit **204** is disposed in proximity to the cable guide **224** at a predetermined offset **V** from the guide **224** used for holding the brake cable or hose **116** and the throttle cable **202.** This distance between the APS unit **204** and the cable guide **224** lies between the range of 15 mm to 55 mm depending upon the stiffness of the brake cable or hose **116** and the throttle cable **202.** This position provides restriction of movement for the brake cables or hose **116** and the throttle cable **202.** In addition, the gap **207** (shown in **Fig 5(b)****)** created between the APS unit **204** and the brake cables or hose **116,** wherein the brake cable or hose resting on the APS mounting bracket **206,** prevents contact of the brake cable or hose **116** with APS unit **204** during the brake actuation condition.

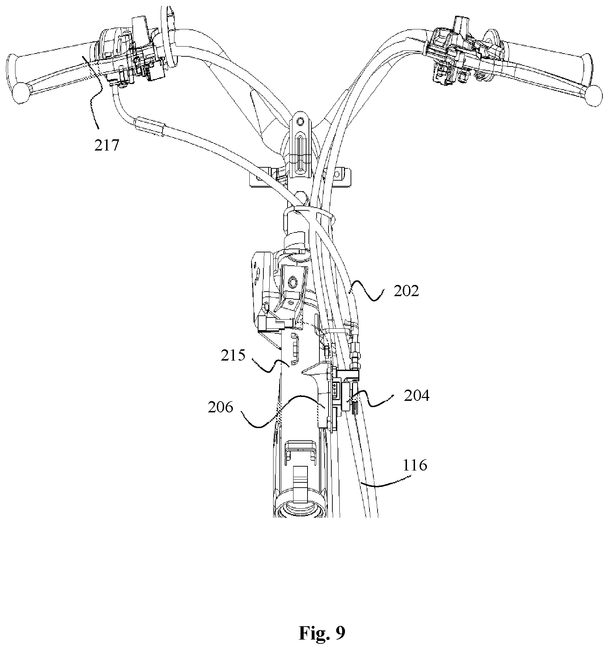

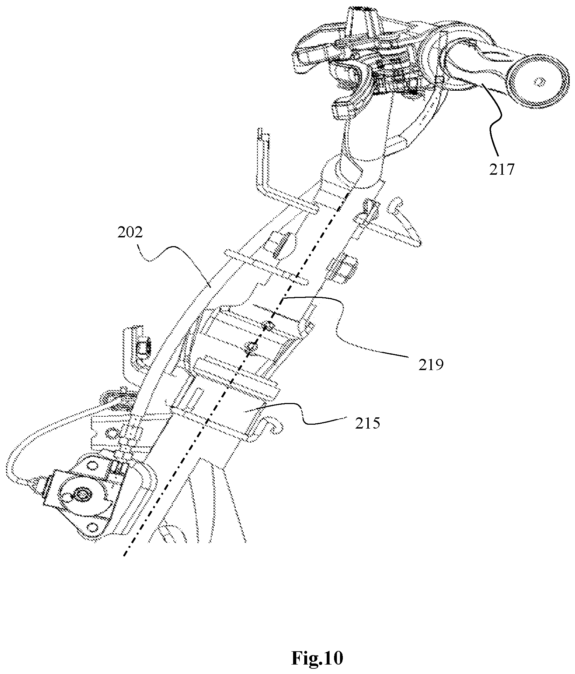

**Fig.** 9 and **10** exemplarily illustrates a routing of the throttle cable 202 from the handle bar grip assembly **217** to the APS unit **204** in a front view of the vehicle. The throttle cable **202** starts from the handle bar grip assembly **217** and terminates at the APS unit. The throttle cable **202** runs all the way in downward direction substantially along the head pipe **215.** The throttle cable **202** from the handle bar grip assembly **217** is routed from the rear portion of the vertical axis **219** of the head pipe **215,** and is routed towards the front portion of the vertical axis **219** of the head pipe **215** when viewed from the side of the vehicle **100.** The throttle cable **202** thus terminates at the APS unit **204.**

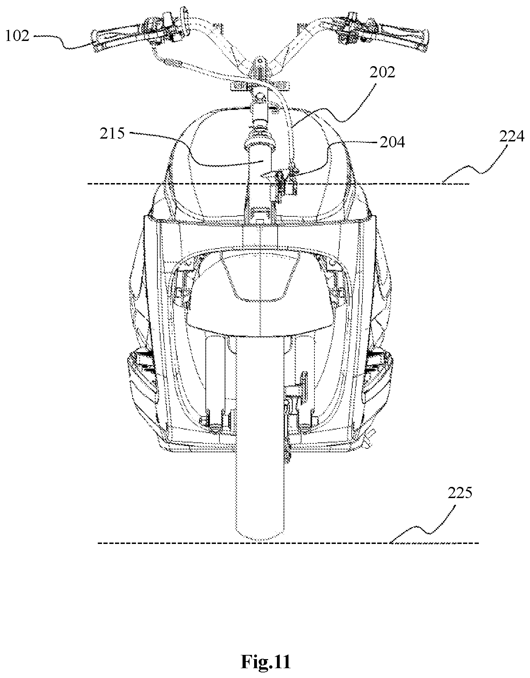

**Fig. 11** exemplarily illustrates the APS unit **204** in a front view of the vehicle **100.** The APS unit **204** mounted on the head pipe **215** of the vehicle **100** have an axis **225** passing through the APS unit **204** when viewed from the front of the vehicle **100.** This axis **225** is disposed in a lateral direction parallel to axis of the ground **226** to attain stability and to facilitate ease of mounting of the APS unit **204.** This configuration helps in articulation of throttle cable **202** so that throttle cable length is also reduced.

### List of Reference numerals:

100: Two- wheeled vehicle
101: Cover handle assembly
102: Handle bar
103: Second panel
104: Frame
106: Seat assembly
107: Rear panel
108: Rear Shock absorber
109: Rear wheel
110: Swing arm
112: Front wheel
113: Front suspension
116: Front brake cable
117: Front brake cable & APS mounting bracket interfacing region
121: Front and rear parts joining line
201: First panel
202: Throttle cable
203: headlamp unit
204: APS (Acceleration Position Sensor)
205: Stay headlamp mounting brackets
206: APS mounting bracket
207: Gap
208: Stay headlamp top mounting fasteners
209: APS mounting fasteners
210: Stay headlamp bottom mounting fasteners
211: Front Surface
212: Top Surface
213: Side Surface
214: Rear Surface (formed by joining surface 212& 213 tangentially)
215: Head pipe
217: Handlebar grip assembly
219: Vertical axis of head pipe
224: Cable guide
V: Distance between the Cable guide and APS
F: Front portion
R: Rear portion
C: acute angle
D: Throttle cable disposed parallel to head pipe axis
225: Axis from APS unit parallel to the ground
226: Ground

## Claims

1. A vehicle (100), where said vehicle (100) is a two-wheeled or three wheeled vehicle (100), said vehicle (100) comprising:
a frame (104) including a front portion (F) and a rear portion (R), said front portion (F) includes a head pipe (215); and
a handle bar assembly (102);
an accelerator position sensor (204) configured to detect a throttle position, said accelerator position sensor (204) is operatively connected to a throttle input of said handle bar assembly by a throttle cable (202);
wherein said accelerator position sensor (204) is disposed on said head pipe (215) of said frame (104) and is placed between a first panel (201) and a second panel (103);
**characterized in that** said accelerator position sensor (204) is disposed so that at least a portion of said accelerator position sensor (204) overlaps with a joining region (121) of said first and said second panel respectively (201, 103) when viewed from side of said vehicle (100).

2. The vehicle (100) as claimed in claim 1, wherein said accelerator position sensor (204) is disposed at an offset to said head pipe (215).

3. The vehicle (100) as claimed in claim 2, wherein more than half region of said accelerator position sensor (204) is overlappingly covered by said second panel (103) and remaining portion of the accelerator position sensor (204) is covered by said first panel (201) when viewed from either side of said vehicle (100).

4. The vehicle (100) as claimed in claim 1, wherein said vehicle includes a headlamp unit (203), where said headlamp unit (203) is mounted on plurality of headlamp mounting bracket (205) attached to said head pipe (215), and said accelerator position sensor (204) is disposed within a region formed between the plurality of headlamp mounting bracket (205) when viewed from either side of said vehicle (100).

5. The vehicle (100) as claimed in claim 1, wherein said accelerator position sensor (204) is mounted with one or more mounting brackets (206) disposed on said head pipe (215).

6. The vehicle (100) as claimed in claim 5, wherein said one or more mounting brackets (206) includes a side surface (211), a top surface (212), a first rear surface (214) and a second rear surface (213), wherein said top surface (212) and said second rear surface (213) forms an obtuse angle with said side surface (211), and wherein said top surface (212) and said second rear surface (213) are connected to said first rear surface (214) tangentially.

7. The vehicle (100) as claimed in claim 1, wherein said accelerator position sensor (204) is disposed in proximity to a guide (224) attached to said head pipe (215) for guiding one or more brake cable or hose (116) and a throttle cable (202).

8. The vehicle (100) as claimed in claim 7, wherein a distance between said accelerator position sensor (204) and said cable guide (224) lies between a range of 15 mm to 55 mm.

9. The vehicle (100) as claimed in claim 1, wherein said throttle cable (202) is positioned parallel (D) to or at an acute angle (C) to a head pipe axis (219) of said head pipe (215).

10. The vehicle (100) as claimed in claim 9, wherein said throttle cable (202) from said handlebar assembly (102) is routed from a rear side of a head pipe axis (219) of said head pipe (215) and is routed towards a front side of said head pipe axis (219) of said head pipe (215) terminating said accelerator position sensor (204).

11. The vehicle (100) as claimed in claim 1 or 8, wherein a predetermined working gap (207) is created between said accelerator position sensor (204) and said brake cable or hose (116), when said handle bar assembly (102) is rotated towards one of a left side or right side in maximum steered condition.

12. The vehicle (100) as claimed in claim 1, wherein said accelerator position sensor (204) is packaged near a column tube of said handlebar assembly (102).

13. The vehicle (100) as claimed in claim 1, wherein an axis (225) of said accelerator position sensor (204) is disposed in a lateral direction parallel to a ground (226) to attain stability and to facilitate ease of mounting of said accelerator position sensor (204).

## Patentansprüche

1. Fahrzeug (100), wobei das Fahrzeug (100) ein zwei- oder dreirädriges Fahrzeug (100) ist, wobei das Fahrzeug (100) aufweist:
einen Rahmen (104) mit einem vorderen Abschnitt (F) und einem hinteren Abschnitt (R), wobei der vordere Abschnitt (F) ein Lenkrohr (215) umfasst; und
eine Lenkstangenanordnung (102);
einen Gashebel-Stellungssensor (204), eingerichtet zum Erkennen einer Drosselklappenstellung, wobei der Gashebel-Stellungssensor (204) über ein Gaszugseil (202) mit einer Gashebeleingabe der Lenkstangenanordnung wirkverbunden ist;
wobei der Gashebel-Stellungssensor (204) an dem Lenkrohr (215) des Rahmens (104) angeordnet ist und zwischen einem ersten Karosserieteil (201) und einem zweiten Karosserieteil (103) positioniert ist;
**dadurch gekennzeichnet, dass** der Gashebel-Stellungssensor (204) so angeordnet ist, dass zumindest ein Teil des Gashebel-Stellungssensors (204) mit einem Verbindungsbereich (121) des ersten bzw. zweiten Karosserieteils (201, 103) bei Betrachtung von der Seite des Fahrzeugs (100) aus überlappt.

2. Fahrzeug (100) nach Anspruch 1, wobei der Gashebel-Stellungssensor (204) versetzt zum Lenkrohr (215) angeordnet ist.

3. Fahrzeug (100) nach Anspruch 2, wobei mehr als die Hälfte des Bereichs des Gashebel-Stellungssensors (204) von dem zweiten Karosserieteil (103) überlappend verdeckt ist und der verbleibende Teil des Gashebel-Stellungssensors (204) von dem ersten Karosserieteil (201) verdeckt ist, bei Betrachtung von einer der beiden Seiten des Fahrzeugs (100) aus.

4. Fahrzeug (100) nach Anspruch 1, wobei das Fahrzeug eine Scheinwerfereinheit (203) beinhaltet, wobei die Scheinwerfereinheit (203) auf einer Vielzahl von Scheinwerfer-Befestigungsteilen (205) angebracht ist, die an dem Lenkrohr (215) angebracht sind, und der Gashebel-Stellungssensor (204) in einem zwischen der Vielzahl von Scheinwerfer-Befestigungsteilen (205) gebildeten Bereich angeordnet ist, bei Betrachtung von einer der beiden Seiten des Fahrzeugs (100) aus..

5. Fahrzeug (100) nach Anspruch 1, wobei der Gashebel-Stellungssensor (204) mit einem oder mehreren auf dem Lenkrohr (215) angeordneten Befestigungsteilen (206) angebracht ist.

6. Fahrzeug (100) nach Anspruch 5, wobei das bzw. die Befestigungsteile (206) eine Seitenfläche (211), eine Oberseite (212), eine erste Rückseite (214) und eine zweite Rückseite (213) beinhalten, wobei die Oberseite (212) und die zweite Rückseite (213) mit der Seitenfläche (211) einen stumpfen Winkel bilden und wobei die Oberseite (212) und die zweite Rückseite (213) tangential mit der ersten Rückseite (214) verbunden sind.

7. Fahrzeug (100) nach Anspruch 1, wobei der Gashebel-Stellungssensor (204) in der Nähe einer an dem Lenkrohr (215) befestigten Führung (224) zum Führen eines oder mehrerer Bremsseile oder -schläuche (116) und eines Gashebelzugs (202) angeordnet ist.

8. Fahrzeug (100) nach Anspruch 7, wobei ein Abstand zwischen dem Gashebel-Stellungssensor (204) und der Führung der Seile (224) in einem Bereich von 15 mm bis 55 mm liegt.

9. Fahrzeug (100) nach Anspruch 1, wobei der Gashebelzug (202) parallel (D) zu oder in einem spitzen Winkel (C) zu einer Lenkrohrachse (219) des Lenkrohrs (215) liegt.

10. Fahrzeug (100) nach Anspruch 9, wobei der Gashebelzug (202) von der Lenkstangenanordnung (102) von einer Rückseite einer Lenkrohrachse (219) des Lenkrohrs (215) geführt ist und zu einer Vorderseite der Lenkrohrachse (219) des Lenkrohrs (215) hin am Gashebel-Stellungssensor (204) endend geführt ist.

11. Fahrzeug (100) nach Anspruch 1 oder 8, wobei zwischen dem Gashebel-Stellungssensor (204) und dem Bremszug oder -schlauch (116) ein vorbestimmter Arbeitsabstand (207) gebildet wird, wenn die Lenkstangenanordnung (102) nach links oder nach rechts im Zustand maximaler Auslenkung gedreht wird.

12. Fahrzeug (100) nach Anspruch 1, wobei der Gashebel-Stellungssensor (204) in der Nähe eines Säulenrohrs der Lenkstangenanordnung (102) untergebracht ist.

13. Fahrzeug (100) nach Anspruch 1, wobei eine Achse (225) des Gashebel-Positionssensors (204) in einer seitlichen Richtung parallel zum Boden (226) angeordnet ist, um Stabilität zu erreichen und eine leichte Montage des Gashebel-Positionssensors (204) zu fördern.

## Revendications

1. Véhicule (100), ledit véhicule (100) étant un véhicule à deux ou trois roues (100), ledit véhicule (100) comprenant :
un cadre (104) incluant une partie avant (F) et une partie arrière (R), ladite partie avant (F) incluant un tube de direction (215) ; et
un ensemble de guidon (102) ;
un capteur de position d'accélérateur (204) configuré pour détecter une position du papillon, ledit capteur de position d'accélérateur (204) étant relié de manière opérationnelle à une entrée de papillon dudit ensemble de guidon par un câble d'accélérateur (202) ;
ledit capteur de position d'accélérateur (204) étant disposé sur ledit tube de direction (215) dudit cadre (104) et est placé entre un premier panneau (201) et un deuxième panneau (103) ;
**caractérisé en ce que** ledit capteur de position d'accélérateur (204) est disposé de telle sorte qu'au moins une partie dudit capteur de position d'accélérateur (204) chevauche une zone de jonction (121) desdits premier et deuxième panneaux respectivement (201, 103), vu depuis le côté dudit véhicule (100).

2. Véhicule (100) selon la revendication 1, dans lequel ledit capteur de position de l'accélérateur (204) est disposé de manière décalée par rapport audit tuyau d'échappement (215).

3. Véhicule (100) selon la revendication 2, dans lequel plus de la moitié de ladite zone du capteur de position de l'accélérateur (204) est recouverte de manière chevauchante par ledit deuxième panneau (103) et la partie restante du capteur de position de l'accélérateur (204) est recouverte par ledit premier panneau (201), vu depuis l'un ou l'autre côté dudit véhicule (100).

4. Véhicule (100) selon la revendication 1, **caractérisé en ce que** ledit véhicule comprend un ensemble projecteur (203), ledit ensemble projecteur (203) étant monté sur une pluralité de supports de fixation de projecteur (205) fixés audit tube de direction (215), et ledit capteur de position de l'accélérateur (204) est disposé dans une zone formée entre lesdits supports de fixation de projecteur (205), vu depuis l'un ou l'autre côté dudit véhicule (100).

5. Véhicule (100) selon la revendication 1, dans lequel ledit capteur de position de l'accélérateur (204) est monté à l'aide d'un ou plusieurs supports de fixation (206) disposés sur ledit tube de direction (215).

6. Véhicule (100) selon la revendication 5, dans lequel ledit ou lesdits supports de fixation (206) comprennent une surface latérale (211), une surface supérieure (212), une première surface arrière (214) et une deuxième surface arrière (213), ladite surface supérieure (212) et ladite deuxième surface arrière (213) formant un angle obtus avec ladite surface latérale (211), et ladite surface supérieure (212) et ladite deuxième surface arrière (213) étant reliées à ladite première surface arrière (214) de manière tangentielle.

7. Véhicule (100) selon la revendication 1, dans lequel ledit capteur de position de l'accélérateur (204) est disposé à proximité d'un guide (224) fixé audit tuyau de direction (215) pour guider un ou plusieurs câbles ou flexibles de frein (116) et un câble d'accélérateur (202).

8. Véhicule (100) selon la revendication 7, dans lequel la distance entre ledit capteur de position de l'accélérateur (204) et ledit guide-câbles (224) est compris dans une plage comprise entre 15 mm et 55 mm.

9. Véhicule (100) selon la revendication 1, dans lequel ledit câble d'accélérateur (202) est positionné parallèle à (D) ou selon un angle aigu (C) par rapport à l'axe (219) dudit tube de direction (215).

10. Véhicule (100) selon la revendication 9, dans lequel ledit câble d'accélérateur (202) provenant dudit ensemble de guidon (102) est acheminé depuis un côté arrière de l'axe (219) dudit tube de direction (215) et est acheminé vers un côté avant dudit axe (219) dudit tube de direction (215), en aboutissant audit capteur de position d'accélérateur (204).

11. Véhicule (100) selon la revendication 1 ou 8, dans lequel un jeu de fonctionnement prédéterminé (207) est créé entre ledit capteur de position d'accélérateur (204) et ledit câble ou flexible de frein (116), lorsque ledit ensemble de guidon (102) est tourné vers le côté gauche ou vers le côté droit en position de braquage maximal.

12. Véhicule (100) selon la revendication 1, dans lequel ledit capteur de position de l'accélérateur (204) est logé à proximité d'un tube de colonne dudit ensemble de guidon (102).

13. Véhicule (100) selon la revendication 1, dans lequel un axe (225) dudit capteur de position d'accélérateur (204) est disposé dans une direction latérale parallèle au sol (226) afin d'assurer la stabilité et de faciliter le montage dudit capteur de position d'accélérateur (204).
